# EUROPÄISCHE PATENTSCHRIFT

(11) **EP 0 635 465 B1**
(45) Veröffentlichungstag und Bekanntmachung des Hinweises auf die Patenterteilung: **18.06.1997**
(21) Anmeldenummer: 94111153.6
(22) Anmeldetag: 18.07.1994
(51) Int. Cl.: C05F 17/02

(54) **Plattensystem zum Erstellen von Plattenböden**
Panel system for forming panel floors
Système de panneaux pour sols

(30) Priorität: 19.07.1993 DE 4324142
(43) Veröffentlichungstag der Anmeldung: 25.01.1995
(73) Patentinhaber: iKA Gesellschaft für industrielle Kunststoff-Anwendungen mbH, D-49393 Lohne (DE)
(72) Erfinder: Averbeck, Mechtild, D-49456 Bakum (DE)
(74) Vertreter: Schulze Horn, Stefan, Dipl.-Ing. M.Sc.

(56) Entgegenhaltungen:
- EP-A- 0 507 353
- WO-A-93/05863
- DE-A- 3 711 816
- US-A- 5 052 157

## Beschreibung

Die Erfindung betrifft ein Plattensystem zum Erstellen von Plattenböden für die Lagerung schüttfähiger Güter, insbesondere zur Kompostierung, Belüftung und/oder Entwässerung organischer Stoffe und/oder zur Behandlung von Gasen mittels eines auf dem Plattenboden befindlichen Filtermaterialbettes.

Ein erstes Plattensystem der genannten Art ist aus DE-A-37 11 816 bekannt. Dieses bekannte Plattensystem dient insbesondere dazu, darauf schüttbare Materialien, z.B. Pflanzenreste, zur Kompostierung zu lagern. Durch einen Hohlraum zwischen Unterplatten und Tragplatten und durch Durchlaßöffnungen kann das zu kompostierende Material belüftet, entwässert und/oder begast werden. Sowohl die Unterplatten als auch die Tragplatten bestehen aus Beton, der bedarfsweise mit einer Glasfaserverstärkung versehen sein kann. Auch die Abstandshalter, die bevorzugt mit den Platten einstückig ausgeführt sind, bestehen aus Beton. Zur Herstellung eines Plattenbodens werden die Unterplatten und die Tragplatten zueinander deckungsgleich verlegt, wobei für die Auslegung der Unterplatten ein ebener Untergrund Voraussetzung ist.

Ein weiteres Plattensystem ist aus der EP-A-0 507 353 bekannt. Dieses Plattensystem umfaßt Unterplatten, die aus Kunststoff bestehen und mit kegelstumpfförmigen Abstandshaltern ausgebildet sind. Auf diese Abstandshalter sind Oberplatten, die ebenfalls aus Kunststoff bestehen, aufgelegt, die eine glatte Fläche bilden. Dieses Plattensystem ist zur Auslegung in Innenräumen gedacht, wobei die zwischen Unterplatten und Oberplatten verbleibenden Zwischenräume für die Verlegung von Kabeln genutzt werden sollen. Die Oberseite des mit diesem Plattensystem hergestellten Plattenbodens bildet den Fußboden eines Raumes, der von Personen begehbar ist und auf dem Möbelstücke aufgestellt werden können.

Ein drittes Plattensystem ist aus US-A-5 052 157 bekannt, das wie das zuvor beschriebene Plattensystem zur Herstellung von Fußböden dient, in welchen Hohlräume zur Verlegung von Kabeln, Schläuchen und anderen Leitungen, insbesondere für die Verbindung von Computern untereinander, unsichtbar verlegbar sind. Die Oberplatten bilden auch hier eine glatte Oberfläche, die von Personen begehbar ist und auf der Möbel aufgestellt werden können.

Es stellt sich daher die Aufgabe, ein Plattensystem der eingangs genannten Art zu schaffen, das sowohl sehr haltbar und hoch belastbar als auch kostengünstig herstellbar und leicht einbaubar ist.

Die Lösung dieser Aufgabe gelingt erfindungsgemäß durch ein Plattensystem zum Erstellen von Plattenböden für die Lagerung schüttfähiger Güter, insbesondere zur Kompostierung, Belüftung und/oder Entwässerung organischer Stoffe und/oder zur Behandlung von Gasen mittels eines auf dem Plattenboden befindlichen Filtermaterialbettes, wobei
a) jeweils mehrere auf einem Untergrund auszulegende Unterplatten, mehrere obere, mit Durchlaßöffnungen versehene Tragplatten und mehrere in einem regelmäßigen Raster angeordnete Abstandshalter zwischen den Unterplatten und den Tragplatten zur Schaffung eines Hohlraumes zwischen diesen vorhanden sind,
b) die Unterplatten, die Tragplatten und die Abstandshalter Spritzgußteile aus Kunststoff sind,
c) die Unterplatten und/oder die Tragplatten an mindestens zwei zueinander benachbarten Kanten mit jeweils mindestens einem elastisch-flexibel einfederbaren, im unbelasteten Zustand aus der Kantenlinie vorragenden Dehnfugenanschlag ausgebildet ist/sind,
d) die Abstandshalter mit den Unterplatten und/oder mit den Tragplatten und/oder miteinander mittels ineinandergreifender Steckverbindungen verbindbar sind und
e) die den Plattenboden bildenden Unterplatten und Tragplatten in wenigstens einer Flächenrichtung einander überlappend angeordnet sind.

Dadurch, daß die Platten und die Abstandshalter Spritzgußteile aus Kunststoff sind, wird eine einfache und kostengünstige Herstellbarkeit gewährleistet. Zudem sind die Platten aufgrund des verwendeten Materials im Vergleich zu den Betonplatten bezogen auf die Fläche um 90 % leichter. Dadurch sind die erfindungsgemäßen Platten zum Erstellen von Plattenböden manuell handhabbar und von einer Person verlegbar, ohne daß Hebegeräte oder dergleichen Hilfsmittel benötigt werden. Auch Lagerung und Transport werden aufgrund des geringen Gewichtes und der nicht erforderlichen Aushärtungsphase wesentlich vereinfacht und verbilligt. Die hohe Belastbarkeit und Festigkeit des Plattenbodens gemäß Erfindung wird durch die Steckverbindungen und die überlappende Verlegung der Platten gewährleistet. Dadurch wird eine auf die Oberseite einer Tragplatte ausgeübte punktuelle Belastung auf eine große Fläche verteilt und abgetragen, so daß trotz der Verwendung von Kunststoff für den Plattenboden dieser eine mit dem Betonboden gemäß dem Stand der Technik vergleichbare Belastbarkeit aufweist. Auch der Plattenboden gemäß der Erfindung ist mit Arbeitsfahrzeugen ohne weiteres befahrbar, ohne Schaden zu nehmen. Außerdem ist Kunststoff gegen die bei den üblichen Anwendungen auftretenden chemischen Belastungen, wie Feuchtigkeit oder schwache Säuren, resistent, so daß auch eine sehr gute Lebensdauer der Plattenböden erwartet werden kann. Bei manchen Anwendungen, z.B. für eine Kompostierung, unterliegen die Plattenböden erheblichen thermischen Wechselbelastungen, was zu temperaturabhängigen Dehnungen und Schrumpfungen der Platten führt. Um Verwerfungen des Plattenbodens zu vermeiden und zugleich das Verlegen der Platten zu dem Plattenboden zu vereinfachen, sind die Dehnfugenanschläge vorgesehen. Hierdurch werden die Platten bei ihrer Verlegung in einem normal temperierten, d.h. nicht erwärmten Zustand in einem ausreichenden Abstand voneinander gehalten. Bei Erwärmung der Platten, sei es durch Prozeßwärme aus Kompostierungsvorgängen oder durch starke Sonneneinstrahlung bei freiliegenden Plattenoberflächen, können sich die Platten unter Einfederung der Dehnfugenanschläge ausdehen, ohne daß es zu einem Aufwölben oder Verwerfen des Plattenbodens kommen kann.

Um einerseits die Herstellung zu vereinfachen und andererseits einen möglichst stabilen Verbund zwischen Unterplatten und Tragplatten des Plattensystems zu erreichen, ist bevorzugt vorgesehen, daß die Abstandshalter einstückig mit der Unterplatte und/oder der Tragplatte ausgebildet sind.

Damit die Abstandshalter bei möglichst geringem Materialeinsatz eine möglichst hohe Stabilität und Tragfähigkeit erhalten, ist bevorzugt vorgesehen, daß diese als im Querschnitt runde oder quadratische Hohlsäulen mit innenliegenden Versteifungsrippen oder -stegen ausgebildet sind. Diese Abstandshalter sind sowohl in ihrer Axialrichtung als auch quer zu ihrer Axialrichtung hoch belastbar, ohne abzuknicken oder zu brechen.

Weiterhin wird vorgeschlagen, daß die Unterplatten und die Tragplatten quadratisch oder rechteckig sind und daß in der Fläche der Platten Abstandshalter mit Vollquerschnitt, an den Kanten der Platten Abstandshalter mit Halbquerschnitt und an den Ecken der Platten Abstandshalter mit Viertelquerschnitt angeordnet sind, wobei je zwei Abstandshalter mit Halbquerschnitt von zwei aneinander angrenzenden Platten und je vier Abstandshalter mit Viertelquerschnitt von vier aneinander angrenzenden Platten sich zu einem vollen Abstandshalter-Querschnitt ergänzen. Mit dieser Ausgestaltung des Plattensystems wird erreicht, daß die Tragplatten auch an ihren Kanten und ihren Ecken unterstützt werden, so daS ein Abknicken dieser Bereiche auch bei punktuellen Belastungen nicht auftreten kann. Zudem wird durch die überlappende Verlegung, die zumindest in einer Flächenrichtung und bevorzugt in beiden Flächenrichtungen erfolgt, ein besonders fester Verbund zwischen Unterplatten und Tragplatten gewährleistet. Diese überlappende Verlegung wird in keiner Weise durch die nur mit Teil-Querschnitten ausgebildeten Abstandshalter behindert, weil sich diese jeweils immer zu einem Abstandshalter mit vollem Querschnitt ergänzen, der sich wieder in derselben Art und Weise wie ein einstückiger Abstandshalter mit vollem Querschnitt mit der entsprechenden Steckverbindung verbinden läßt.

Hinsichtlich der Steckverbindungen ist bevorzugt vorgesehen, daß diese plattenseitig als Steckprofil mit je einem das freie Ende des Abstandshalters ringförmig umgreifenden Steckprofilrand und mit mehreren innerhalb des Steckprofilrandes im Abstand von diesem und voneinander angeordneten Steckprofilklemmen ausgebildet ist, wobei der Abstand derart bemessen ist, daß der Steckprofilrand und die Steckprofilklemmen das freie Ende eines eingesteckten Abstandshalters zwischen sich im Klemmsitz halten. Durch das ringförmige Umgreifen der freien Enden der Abstandshalter wird eine besonders sichere Verbindung erreicht, die bei Belastung von oben noch verstärkt wird. Außerdem halten die ringförmigen Steckprofilränder die einander ergänzenden Abstandshalter mit Halb- und Viertel-Querschnitt zusammen, so daß spezielle Kupplungsringe, wie sie beim Stand der Technik erforderlich sind, hier nicht benötigt werden.

Zur Verstärkung und zur Erhöhung der Tragkraft der Tragplatten des Plattensystems ist vorgesehen, daß diese unterseitig mit Verrippungen ausgebildet sind, die entlang von einander rechtwinklig kreuzenden Linien, die durch die Mittelpunkte der Abstandshalter oder der Steckprofile verlaufen, zwischen diesen angeordnet sind. Diese Verrippungen verhindern wirksam sowohl Durchbiegungen nach unten als auch Verwindungen der Tragplatten.

Eine Weiterbildung des Plattensystems schlägt hinsichtlich der Verrippungen vor, daS die in der Fläche der Tragplatte verlaufenden Verrippungen als doppelte Wandverrippungen und die entlang der Kanten der Tragplatte verlaufenden Verrippungen als einfache Wandverrippung ausgeführt sind. Bei zu einem Plattenboden verlegten Tragplatten ergänzen sich dann die Verrippungen entlang der Kanten zweier aneinander angrenzender Tragplatten ebenfalls zu einer doppelten Wandverrippung, so daß sämtliche Verrippungen an der Tragplatte über die gesamte Fläche des Plattenbodens gesehen doppelte Wandverrippungen sind.

Hinsichtlich der Verrippung wird weiter vorgeschlagen, daS die doppelte Wandverrippung mit einem für die Hindurchführung eines Schneid- oder Trennwerkzeuges oder Sägeblattes ausreichend breiten Zwischenraum ausgeführt ist. In der Praxis genügt hier eine Breite des Zwischenraums von etwa 5 bis 10 mm. Entlang dieses Zwischenraumes kann die Tragplatte auf einfache Art und Weise in kleinere Plattenelemente zerteilt werden, um eine vorgegebene Fläche möglichst genau vollständig auslegen zu können. Außerdem können so durch die versetzte Verlegung von Unterplatten und Tragplatten auftretende schmale Randbereiche lückenlos mit den verkleinerten Tragplattenteilen ausgelegt werden. Auch die zerteilten kleineren Plattenteile haben an den durch das Zerteilen neu entstandenen Kanten jeweils noch eine einfache Wandverrippung, so daß auch hier eine ausreichende Stabilität in dem gleichen Maße gewährleistet ist, wie sie bei den unzerteilten Platten vorliegt.

Ein bevorzugtes Verhältnis von Länge zu Breite der Unter- und Tragplatten beträgt 3 : 2, wobei die Abstandshalter bzw. die Steckprofile an den Eckpunkten von sechs gedachten gleichen Quadraten, die die Fläche der Platte darstellen, angeordnet sind.

Um für Anwendungen, bei denen ein besonders großer Hohlraum zwischen den Unterplatten und den Tragplatten des Plattenbodens gewünscht ist, nicht eigens geänderte Unterplatten oder Tragplatten herstellen und vorhalten zu müssen, ist vorgesehen, daß zusätzliche Distanzstücke vorhanden sind, die jeweils zwischen zwei Abstandshaltern oder zwischen einem Abstandshalter und der Unterplatte und/oder der Tragplatte steckend anbringbar sind. Dabei können nach Belieben ein oder mehrere Distansstücke an jedem Abstandshalter vorgesehen werden, je nach dem, welche Hohlraumvergrößerung gewünscht wird. Dabei sind die Distanzstücke zweckmäßig so ausgebildet, daß sie an ihrem einen Ende dem freien Ende der Abstandshalter entsprechend und an ihrem anderen Ende den Steckprofilen entsprechend geformt sind, um sie ohne weitere Hilfsmittel mit den Abstandshaltern und den Steckprofilen verbinden zu können.

Zweckmäßig sind die Distanzstücke ebenfalls Spritzgußteile aus Kunststoff, womit auch diese einfach und kostengünstig herstellbar sind und bei hoher Festigkeit und Tragfähigkeit ein geringes Gewicht aufweisen.

Ein geeigneter Kunststoff für das Plattensystem ist beispielsweise Polyethylen, vorzugsweise hochdichtes Polyethylen. Neben den schon erwähnten Vorteilen bietet das Plattensystem damit auch den Vorteil einer problemlosen und vollständigen Wiederverwertbarkeit, sowohl in Form einer stofflichen als auch thermischen Verwertung.

Um die Handhabung der Distanzstücke zu vereinfachen, ist vorgesehen, daß mehrere Distanzstücke im Raster der Abstandshalter mittels Querstegen untereinander verbunden sind. Auf diese Weise lassen sich dann immer mehrere Distanzstücke mit einem Handgriff innerhalb des Plattensystems verlegen.

Als Untergrund für die Auslegung des erfindungsgemäßen Plattenbodens ist beispielsweise eine Betonplatte oder auch ein eingeebneter, bedarfsweise verdichteter natürlicher Untergrund geeignet. Die Tragfähigkeit, die der Untergrund aufweisen muß, wird dabei im wesentlichen nur durch das Gewicht der auf dem Plattenboden zu lagernden Güter und der darauf eingesetzten Arbeitsfahrzeuge bestimmt, da der Plattenboden selbst sehr leicht ist. Für Anwendungsfälle, in denen Flüssigkeiten durch den Hohlraum im Plattenboden abgeführt werden müssen, ist eine Abdichtung des Untergrundes auf einfache Art und Weise beispielsweise durch Beschichtung einer Betonplatte oder durch Auslegen einer Kunststoffolie möglich.

Ausführungsbeispiele der Erfindung werden im folgenden anhand einer Zeichnung erläutert. Die Figuren der Zeichnung zeigen im einzelnen:
- Figur 1: eine Tragplatte in Unteransicht,
- Figur 2: die Tragplatte im Schnitt entlang der Linie II - II in Figur 1,
- Figur 3: eine Unterplatte in Draufsicht,
- Figur 4: die Unterplatte im Schnitt entlang der Linie IV - IV in Figur 3,
- Figur 5: ein Distanzstück teils in Ansicht, teils im Vertikalschnitt,
- Figur 6: das Distanzstück aus Figur 5 in Draufsicht,
- Figur 7: eine Draufsicht auf einen Plattenboden während seiner Erstellung und
- Figur 8: den Plattenboden im Schnitt entlang der Linie VIII - VIII in Figur 7.

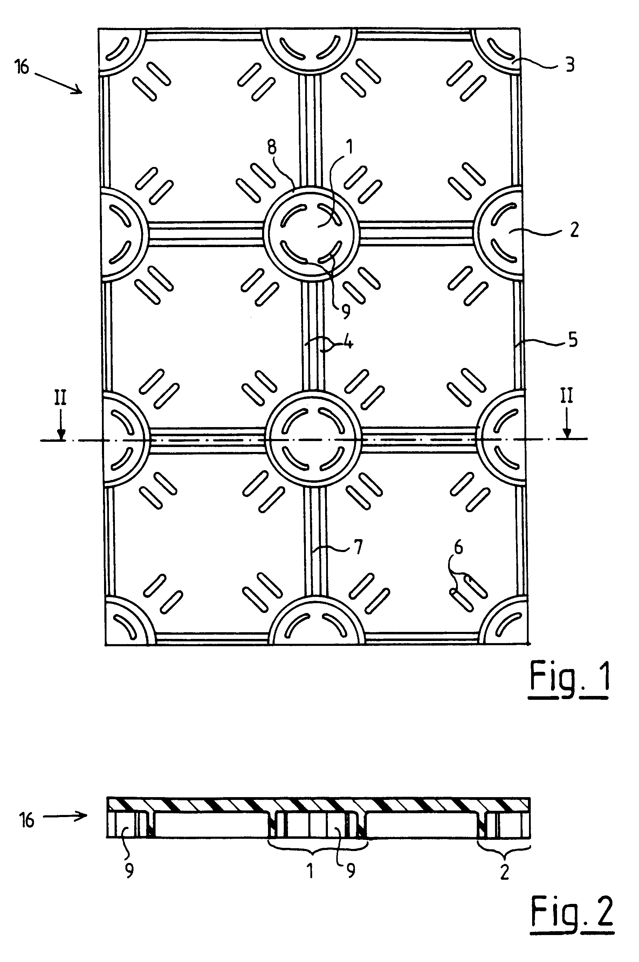

Figur 1 der Zeichnung zeigt eine Tragplatte 16 als Teil des Plattensystems zur Erstellung von Plattenböden in einer Unteransicht. Die Tragplatte 16 ist ein Kunststoff-Spritzgußteil und besitzt einen rechteckigen Umriß mit einem Kantenlängenverhältnis von 3 : 2. An den Eckpunkten von vier gedachten gleichen Quadraten, die die Fläche der Tragplatte 16 bilden, sind jeweils Steckprofile 1, 2, 3 vorgesehen. Die Steckprofile 1 liegen dabei vollständig in der Fläche der Tragplatte 16 und bestehen jeweils aus einem hohlzylindrischen ringförmigen Steckprofilrand 8 sowie je vier Steckprofilklemmen 9, die auf einem kleineren Kreis innerhalb des Steckprofilrandes 8 mit Abstand von diesem und mit Abstand zueinander angeordnet sind. Die Steckprofile 2 liegen an den Kanten des Tragprofils 16 und sind jeweils mit einem Halb-Querschnitt ausgebildet. Demnach ist bei diesen Steckprofilen 2 der Steckprofilrand 8 halbkreisförmig ausgeführt und es sind jeweils nur zwei Steckprofilklemmen 9 vorhanden. Die Steckprofile 3 schließlich liegen an den vier Ecken der Tragplatte 16 und sind mit einem Viertel-Querschnitt ausgeführt, wobei der Steckprofilrand 8 hier einen Viertelkreis beschreibt und jeweils nur eine Steckprofilklemme 9 vorhanden ist.

Bei nebeneinander in der Fläche verlegten Tragplatten 16 ergänzen sich die entlang der Kanten und Ecken vorgesehenen Steckprofile 2, 3 jeweils zu einem Steckprofil mit einem vollen Querschnitt.

Weiterhin sind aus der Figur 1 Verrippungen 4, 5 erkennbar, die senkrecht von der hier sichtbaren Unterseite der Tragplatte 16 vorragen. Die Verrippungen 4, 5 verlaufen entlang von einander rechtwinklig kreuzenden, durch die Mittelpunkte der Steckprofile 1, 2, 3 gehenden Linien. Dabei sind die an den Kanten der Tragplatte 16 vorgesehenen Verrippungen 5 als einfache Wandverrippung und die über die Fläche der Tragplatte 16 verlaufenden Verrippungen 4 als doppelte Wandverrippungen ausgeführt. Bei den doppelten Wandverrippungen 4 besteht zwischen den beiden parallelen Rippen jeweils ein solcher Abstand, daß durch den Zwischenraum problemlos ein Sägeblatt zum Zerteilen der Tragplatte 16 in kleinere Plattenteile hindurchführbar ist. Bei dem gezeigten Ausführungsbeispiel gemäß Figur 1 läßt sich die Tragplatte 16 in Plattenteile aufteilen, die die Hälfte, ein Drittel, zwei Drittel oder ein Sechstel der Plattenfläche einnehmen. Auch die durch das Zerteilen der Tragplatte 16 entstehenden kleineren Plattenteile haben umlaufend an allen ihren Kanten eine einfache Wandverrippung, so daß auch die kleineren Plattenteile eine gegenüber der unzerteilten Tragplatte 16 gleiche Stabilität aufweist.

Schließlich sind in der Figur 1 noch mehrere Durchlaßöffnungen 6 erkennbar, die jeweils in den Flächenbereichen der Tragplatte 16 zwischen den Verrippungen 4, 5 als paarweise angeordnete kurze Schlitze ausgebildet sind. Die Durchlaßöffnungen 6 dienen dazu, entweder von der Oberseite der Tragplatte 16 her Flüssigkeiten nach unten abzuleiten oder von unten her einen Luft- oder Gasdurchtritt zu erlauben.

Aus dem in Figur 2 dargestellten Schnitt durch die Tragplatte 16 gemäß Figur 1 ist ersichtlich, daß die Oberseite der Tragplatte 16 eben und glatt ausgebildet ist. Von der Unterseite der Tragplatte 16 ragen die Steckprofile vor, wobei hier links und rechts jeweils ein Steckprofil 2 mit Halb-Querschnitt und in der Mitte ein Steckprofil 1 mit Voll-Querschnitt sichtbar ist. In den Steckprofilen 1, 2 sind jeweils die Steckprofilklemmen 9 erkennbar.

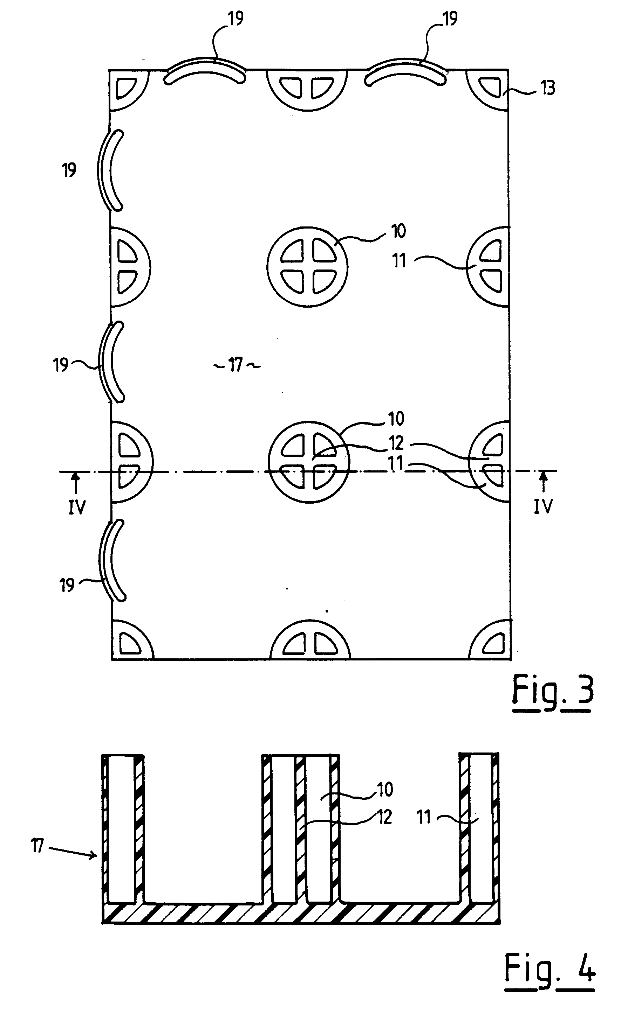

Figur 3 der Zeichnung zeigt in Draufsicht eine Unterplatte 17 als weiteres Teil des Plattensystems. Die Unterplatte 17 ist ebenfalls mit einer rechteckigen Grundform ausgeführt, wobei die Abmessungen hier mit den Abmessungen der Tragplatte 16 übereinstimmen.

Von der hier sichtbaren Oberseite der Tragplatte 17 ragen im gleichen Raster, wie es bei der Tragplatte 16 die Steckprofile 1, 2, 3 bilden, mehrere Abstandshalter 10, 11, 13 nach oben hin vor. Die Abstandshalter 10, 11, 13 sind, ebenso wie die Steckprofile 1, 2, 3 mit der Tragplatte 16, mit der Unterplatte 17 einstückig als Kunststoff-Spritzgußteil hergestellt.

Auch die Abstandshalter 10, 11, 13 sind mit unterschiedlichen Querschnitten ausgeführt, wobei auch hier die in der Fläche der Unterplatte 17 liegenden Abstandshalter 10 mit einem vollkreisförmigen Querschnitt ausgeführt sind, die im Verlauf der Kanten der Unterplatte 17 angeordneten Abstandshalter 11 mit einem halbkreisförmigen Querschnitt und die an den Ecken der Unterplatte 17 angeordneten Abstandshalter 13 mit einem viertelkreiförmigen Querschnitt ausgeführt sind.

Alle Abstandshalter 10, 11, 13 sind als hohle Säulen ausgeführt, wobei die Abstandshalter 10, 11 in ihrem Inneren mit Verstärkungsrippen versteift sind.

Weiterhin sind bei dem in Figur 3 gezeigten Ausführungsbeispiel für die Unterplatte 17 an zwei einander benachbarten Kanten der Platte 17 jeweils mehrere Dehnfugenanschläge 19 vorgesehen. Die Dehnfugenanschläge 19 sind bogenförmige, einstückig mit der Platte 17 ausgeführte Vorsprünge, die im unbelasteten Zustand über die Kantenlinie nach außen vorragen und die bei Ausübung einer in Flächenrichtung wirkenden Kraft elastisch-flexibel einfederbar sind. Diese Dehnfugenanschläge 19 dienen dazu, die Unterplatten 17 bei ihrer Verlegung auf Abstand zu halten, so daß umlaufend zwischen den Platten 17 eine ausreichend breite Dehnfuge verbleibt. Bei einer Erwärmung der Unterplatte 17, z.B. durch starke Sonnenbestrahlung oder durch bei der Kompostierung entstehende Wärme, können sich die Platten 17 ohne Verwerfungen ausdehnen, wobei die Dehnfugenanschläge 19 elastisch-flexibel an die Platten 17 angedrückt werden. Bei nachfolgender Abkühlung und damit verbundener Schrumpfung der Platten 17 federn die Dehnfugenanschläge 19 wieder aus, so daß wieder bei allen Unterplatten 17 umlaufend eine gleichmäßige Dehnfuge vorliegt.

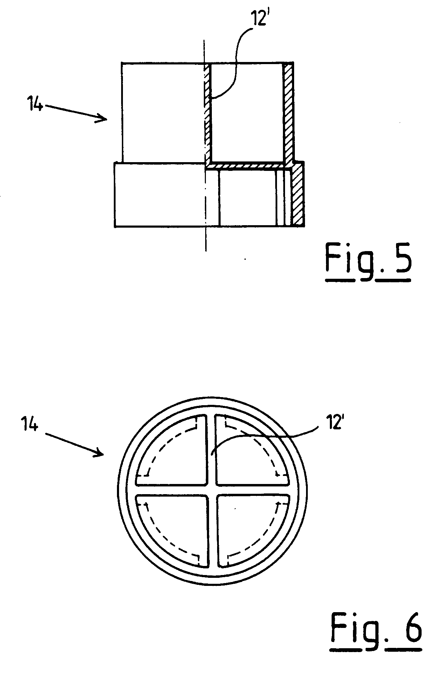

Aus der Schnittdarstellung in Figur 4 ist ersichtlich, daß die Unterplatte 17 mit einer glatten ebenen Unterseite ausgebildet ist, die auf einen vorbereiteten Untergrund, z.B. eine Betonplatte oder ein eingeebneter natürlicher Untergrund, aufgelegt wird. Nach oben hin ragen die Abstandshalter von der Fläche der Grundplatte 17 vor, wobei hier links und rechts jeweils ein Abstandshalter 11 mit Halb-Querschnitt und in der Mitte ein Abstandshalter 10 mit Voll-Querschnitt sichtbar ist. Im Zentrum des Abstandshalters 10 ist eine seiner Verstärkungsrippen 12 sichtbar.

Figur 5 der Zeichnung zeigt als weiteres Element des Plattenbodens ein Distanzstück 14, das bei Bedarf zwischen Abstandshalter und Steckprofil zur Abstandsvergrößerung anbringbar ist. In seinem unteren Teil ist das Distanzstück 14 entsprechend den Steckverbindungen 1 an der Unterseite der Tragplatte 16 ausgebildet; der obere Teil des Distanzstückes 14 entspricht in seiner Formgebung dem oberen Teil der Abstandshalter 10. Zur Versteifung sind auch die Distanzstücke 14 in ihrem Inneren mit einander kreuzenden Verstärkungsrippen 12' versehen. Auch die Distanzstücke 14 sind einstückig als Kunststoff-Spritzgußteile hergestellt.

Für eine Anbringung am Rand eines Plattenbodens sind auch Distanzstücke mit halbkreisförmigem Querschnitt und für die Anbringung an den Ecken eines Plattenbodens Distanzstücke mit einem viertelkreisförmigen Querschnitt vorgesehen, die in der Zeichnung nicht eigens dargestellt sind.

Aus Figur 6 der Zeichnung wird die kreisrunde Querschnittsform des Distanzstückes 14 deutlich erkennbar, wobei außerdem die Lage der Verstärkungsstege 12' sichtbar ist.

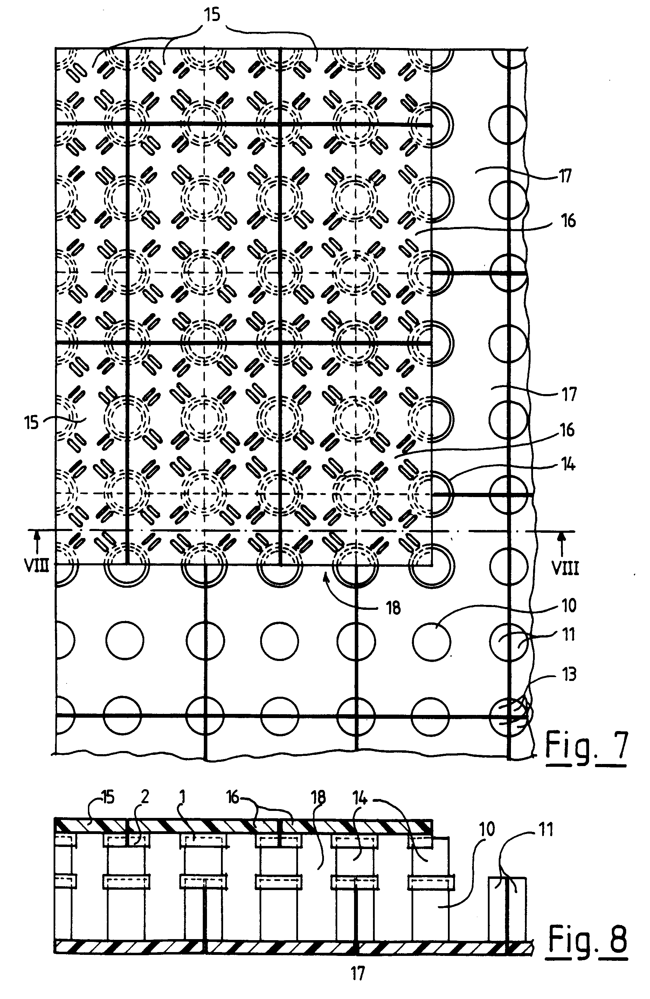

Figur 7 der Zeichnung zeigt in Draufsicht einen Plattenboden während seiner Erstellung aus Unterplatten 17, Distanzstücken 14 und Tragplatten 16. Zur Erstellung des Plattenbodens wird zweckmäßig zunächst die von dem Boden zu bedeckende Fläche vorbereitet, insbesondere eingeebnet und gegebenenfalls zur Erzielung der nötigen Tragfähigkeit verdichtet oder mit einer Betonplatte versehen. Hierauf kann bei Bedarf eine Flüssigkeitsabdichtung, z.B. in Form einer festen Beschichtung oder einer Kunststoffolie ausgelegt werden. Hierauf wird dann eine der Fläche entsprechende Anzahl von Unterplatten 17 dicht an dicht ausgelegt, wobei die an den Unterplatten 17 vorhandenen Abstandshalter 10, 11, 13 ein regelmäßiges Raster bilden. Auf diese Abstandshalter 10, 11, 13 können anschließend die Tragplatten 16 unmittelbar aufgesteckt werden, wobei jeweils ein Abstandshalter 10, 11, 13 in ein Steckprofil 1, 2, 3 eingreift und in diesem klemmend gehaltert wird.

Zwischen den Unterplatten 17 und den Tragplatten 16 wird dabei ein Hohlraum 18 gebildet, der zur Ableitung von Flüssigkeiten oder zur Zuleitung von Luft oder Gasen benutzt werden kann.

Für Fälle, in denen ein größerer Hohlraum 18 zwischen Unterplatten 17 und Tragplatten 16 gewünscht wird, als er bei unmittelbarer Verbindung der Platten 16, 17 miteinander entsteht, sind zwischen den Abstandshaltern 10, 11, 13 und den Steckprofilen 1, 2, 3 Distanzstücke 14 anzubringen, wie dies in dem Beispiel gemäß Figur 7 geschehen ist. Hierzu werden dann nach dem Auslegen der Unterplatten 17 zunächst die Distanzstücke 14 auf die Abstandshalter aufgesetzt, wonach dann die Tragplatten 16 mit ihren unterseitigen Steckprofilen 1, 2, 3 auf die Distanzstücke 14 aufgesetzt werden. Auch hier erfolgt in der gleichen Art und Weise, wie oben schon beschrieben, eine klemmende Verbindung sowohl zwischen den Abstandshaltern 10, 11, 13 und den darauf aufgesetzten Distanzstücken 14 als auch zwischen den Steckprofilen 1, 2, 3 der Tragplatten 16 und den Distanzstücken 14.

Wie aus Figur 7 weiterhin deutlich wird, sind die Unterplatten 17 und die Tragplatten 16 zwar mit gleichen Abmessungen ausgeführt, aber mit einem Versatz in beiden Flächenrichtungen zueinander verlegt. Hierdurch wird vorteilhaft erreicht, daß geteilte Abstandshalter 11, 13 der Unterplatten 17 jeweils von einem ungeteilten Steckprofil 1 der Tragplatten 16 umfaßt werden, wodurch ein besonders sicherer Verbund und eine hohe Belastbarkeit des Plattenbodens insgesamt erreicht wird. Auch erfolgt der Lastabtrag bei oberflächlicher punktueller Belastung von einer Tragplatte 16 immer auf mehrere Unterplatten 17.

Aufgrund der versetzten Verlegung der Unterplatten 17 und der Tragplatten 16 entstehen am äußeren Rand des Plattenbodens, der hier oben und links in der Figur 7 erkennbar ist, Bereiche, in denen keine vollständige Tragplatte 16 aufgebracht werden kann. In diesen Bereichen werden abgeteilte kleinere Plattenteile 15 der Tragplatten 16 verlegt, die, wie zuvor anhand der Figur 1 erläutert, einfach durch Zersägen aus einer vollständigen Tragplatte 16 herstellbar sind. Am oberen Rand des Plattenbodens gemäß Figur 7 sind zwei Tragplattenteile 15 sichtbar, deren Fläche jeweils einem Drittel der Fläche der unzerteilten Tragplatte 16 entspricht; an der linken oberen Ecke des Plattenbodens ist ein Plattenteil 15 verlegt, dessen Fläche einem Sechstel der unzerteilten Tragplatte 16 entspricht und am linken Rand des Plattenbodens sind Plattenteile 15 verlegt, deren Fläche der Hälfte der Fläche der unzerteilten Tragplatte 16 entspricht.

Figur 8 der Zeichnung schließlich zeigt im Schnitt entlang der Linie VIII - VIII in Figur 7 besonders deutlich das Ineinandergreifen der Abstandshalter 10, 11, der Distanzstücke 14 und der Steckprofile 1, 2 des Plattenbodens. Den unteren Teil des Plattenbodens bilden die Unterplatten 17, von deren Oberseite die Abstandshalter 10, 11 nach oben vorragen. Auf jeden Abstandhalter 10, 11 ist hier je ein Distanzstück 14 aufgesetzt, das mit seinem unteren Ende das obere Ende der Abstandshalter 10, 11 umgreift. Hierdurch werden ein fester Sitz relativ zueinander und ein Zusammenhalten der geteilten Abstandshalter 11 erreicht.

Die oberen Enden der Distanzstücke 14 wiederum werden von den Steckprofilen 1, 2 aufgenommen, die von der Unterseite der oben liegenden Tragplatte 16 vorragen. Am linken oberen Rand der Figur 8 ist ein Plattenteil 15 erkennbar, der den Rand des Plattenbodens bildet.

Zwischen der Oberseite der Unterplatte 17 und der Unterseite der Tragplatte 16 wird ein durchgehender Hohlraum 18 gebildet, der zur Ableitung von Flüssigkeiten und/oder zur Zuleitung von Luft oder Gasen nutzbar ist. Aufgrund des relativ geringen Querschnittes der Abstandshalter 10, 11 und der Distanzstücke 14 stehen dabei etwa 80 % des theoretisch zwischen Unterplatte 17 und Tragplatte 16 vorhandenen Raumes für den Hohlraum zur Führung von Flüssigkeiten, Luft und/oder Gasen zur Verfügung.

An seinem äußeren Rand kann der Plattenboden mit einer Einfassung versehen sein, z.B. um dort eine Abdichtung gegen ein Entweichen von Flüssigkeiten oder Gasen zu bilden. Die Einfassung weist dann zweckmäßig Ab- und/oder Zuleitungsöffnungen in der benötigten Zahl und Anordnung auf.

## Patentansprüche

1. Plattensystem zum Erstellen von Plattenböden für die Lagerung schüttfähiger Güter, insbesondere zur Kompostierung, Belüftung und/oder Entwässerung organischer Stoffe und/oder zur Behandlung von Gasen mittels eines auf dem Plattenboden befindlichen Filtermaterialbettes, wobei
a) jeweils mehrere auf einem Untergrund auszulegende Unterplatten (17), mehrere obere, mit Durchlaßöffnungen (6) versehene Tragplatten (16) und mehrere in einem regelmäßigen Raster angeordnete Abstandshalter (10, 11, 13) zwischen den Unterplatten (17) und den Tragplatten (16) zur Schaffung eines Hohlraumes (18) zwischen diesen vorhanden sind,
b) die Unterplatten (17), die Tragplatten (16) und die Abstandshalter (10, 11, 13) Spritzgußteile aus Kunststoff sind,
c) die Unterplatten (17) und/oder die Tragplatten (16) an mindestens zwei zueinander benachbarten Kanten mit jeweils mindestens einem elastisch-flexibel einfederbaren, im unbelasteten Zustand aus der Kantenlinie vorragenden Dehnfugenanschlag (19) ausgebildet ist/sind,
d) die Abstandshalter (10, 11, 13) mit den Unterplatten (17) und/oder mit den Tragplatten (16) und/oder miteinander mittels ineinandergreifender Steckverbindungen (1, 2, 3) verbindbar sind und
e) die den Plattenboden bildenden Unterplatten (17) und Tragplatten (16) in wenigstens einer Flächenrichtung einander überlappend angeordnet sind.

2. Plattensystem nach Anspruch 1, dadurch gekennzeichnet, daß die Abstandshalter (10, 11, 13) einstückig mit der Unterplatte (17) und/oder der Tragplatte (16) ausgebildet sind.

3. Plattensystem nach Anspruch 1 oder 2, dadurch gekennzeichnet, daß die Abstandshalter (10, 11, 13) als im Querschnitt runde oder quadratische Hohlsäulen mit innenliegenden Versteifungsrippen oder -stegen (12) ausgebildet sind.

4. Plattensystem nach einem der vorangehenden Ansprüche, dadurch gekennzeichnet, daß die Unterplatten (17) und die Tragplatten (16) quadratisch oder rechteckig sind und daß in der Fläche der Platten (17, 16) Abstandshalter (10) mit Vollquerschnitt, an den Kanten der Platten (17, 16) Abstandshalter (11) mit Halbquerschnitt und an den Ecken der Platten (17, 16) Abstandshalter (13) mit Viertelquerschnitt angeordnet sind, wobei je zwei Abstandshalter (11) mit Halbquerschnitt von zwei aneinander angrenzenden Platten (17, 16) und je vier Abstandshalter (13) mit Viertelquerschnitt von vier aneinander angrenzenden Platten (17, 16) sich zu einem vollen Abstandshalter-Querschnitt ergänzen.

5. Plattensystem nach einem der vorangehenden Ansprüche, dadurch gekennzeichnet, daß die Steckverbindungen (1, 2, 3) plattenseitig als Steckprofile mit je einem das freie Ende des Abstandshalters (10, 11, 13) ringförmig umgreifenden Steckprofilrand (8) und mit mehreren innerhalb des Steckprofilrandes (8) im Abstand von diesem und voneinander angeordneten Steckprofilklemmen (9) ausgebildet ist, wobei der Abstand derart bemessen ist, daß der Steckprofilrand (8) und die Steckprofilklemmen (9) das freie Ende eines eingesteckten Abstandshalters (10, 11, 13) zwischen sich im Klemmsitz halten.

6. Plattensystem nach einem der vorangehenden Ansprüche, dadurch gekennzeichnet, daß die Tragplatten (16) unterseitig mit Verrippungen (4, 5) ausgebildet sind, die entlang von einander rechtwinklig kreuzenden Linien, die durch die Mittelpunkte der Abstandshalter (10, 11, 13) oder der Steckprofile (1, 2, 3) verlaufen, zwischen diesen angeordnet sind.

7. Plattensystem nach Anspruch 6, dadurch gekennzeichnet, daß die in der Fläche der Tragplatte (16) verlaufenden Verrippungen (4) als doppelte Wandverrippungen und die entlang der Kanten der Tragplatte (16) verlaufenden Verrippungen (5) als einfache Wandverrippung ausgeführt sind.

8. Plattensystem nach Anspruch 7, dadurch gekennzeichnet, daß die doppelte Wandverrippung (4) mit einem für die Hindurchführung eines Schneid- oder Trennwerkzeuges oder Sägeblattes ausreichend breiten Zwischenraum (7) ausgeführt ist.

9. Plattensystem nach einem der vorangehenden Ansprüche, dadurch gekennzeichnet, daß zusätzliche Distanzstücke (14) vorgesehen sind, die jeweils zwischen zwei Abstandshaltern (10, 11, 13) oder zwischen einem Abstandshalter (10, 11, 13) und der Unterplatte (17) und/oder der Tragplatte (16) steckend anbringbar sind.

10. Plattensystem nach Anspruch 9, dadurch gekennzeichnet, daß die Distanzstücke (14) ebenfalls Spritzgußteile aus Kunststoff sind.

11. Plattensystem nach Anspruch 9 oder 10, dadurch gekennzeichnet, daß mehrere Distanzstücke (14) im Raster der Abstandshalter (10, 11, 13) mittels Querstegen untereinander verbunden sind.

## Claims

1. Panel system for forming panel floors for the storage of pourable material, in particular for compost preparation, ventilation, and/or draining organic matters, and /or for the treatment of gases by means of a filter material bottom positioned at the panel floor, wherein
a) in each case several bottom panels (17) to be positioned at a floor, several upper support panels (16) comprising apertures (6), and several spacers (10, 11, 13) arranged in a regular grid are provided between the bottom panels (17), and the support panels (16) to create a hollow space (18) in between,
b) the bottom panels (17), the support panels (16), and the spacers (10, 11, 13) are injection moulding parts made of plastic material,
c) the bottom panels (17), and/or the support panels (16) are formed with at least one expansion gap stop (19) at at least two adjacent edges with the expansion gap stop having elastic spring deflection properties and protruding from the edge line when unstressed,
d) the spacers (10, 11, 13) are connectible with the bottom panels (17), and/or the support panels (16), and/or with each other by means of inter-engaging plug-in connections (1, 2, 3), and
e) the bottom panels (17) forming the panel bottom, and the support panels (16) are arranged in an overlapping fashion in at least one direction of the surface.

2. Panel system according to claim 1, characterized in that the spacers (10, 11, 13) are formed integral with the bottom panel (17), and/or the support panel (16).

3. Panel system according to claim 1 or 2, characterized in that the spacers (10, 11, 13) are formed as hollow colums with a round or square cross-section with inwards arranged stiffening ribs or stiffening webs (12).

4. Panel system according to one of the preceeding claims, characterized in that the bottom panels (17), and the support panels (16) are square or rectangular, and that in the surface of the panels (16, 17) spacers (10) with a full cross-section are arranged, at the edges of the panels (16, 17) spacers (11) with a half cross-section are arranged, and that at the corners of the panels (16, 17) spacers (13) with a quarter cross-section are arranged wherein two spacers (11) each with a half cross-section of two adjacent panels (17, 16), and four spacers (13) each with a quarter cross-section of four adjacent panels (17, 16) complete each other to a full spacer cross-section.

5. Panel system according to one of the preceeding claims, characterized in that the plug-in connections (1, 2, 3) at the side of the panel are formed as plug-in profiles each having a plug-in profile edge (8) annularly engaging the free end of the spacer (10, 11, 13), and several plug-in profile clamps (9) arranged in the plug-in profile edge (8) in spaced relation therefrom and from each other wherein the distance is dimensioned such that the plug-in profile edge (8), and the plug-in profile clamp (9) hold the free end of a plugged in spacer (10, 11, 13) in a clamp fitting.

6. Panel system according to one of the preceeding claims, characterized in that the support panels (16) are formed with a ribbing (4, 5) at the underside thereof with the ribbing arranged between and along rectangularly crossing lines extending through the centers of the spacers (10, 11, 13) or the plug-in profiles (1, 2, 3).

7. Panel system according to claim 6, characterized in that the ribbing (4) extending in the surface of the support panel (16) is formed as a double wall ribbing, and the ribbing (5) extending along the edges of the support panel (16) is formed as a single wall ribbing.

8. Panel system according to claim 7, characterized in that the double wall ribbing (4) is formed with a gap (7) sufficient wide for inserting a cutting or separating tool or saw blade.

9. Panel system according to one of the preceeding claims, characterized in that additional spacer blocks (14) are provided each of them to be plugged between two spacers (10, 11, 13) or between a spacer (10, 11, 13) and the bottom panel (17) and/or the support panel (16).

10. Panel system according to claim 9, characterized in that the spacer blocks (14) also are injection moulding parts made of plastic material.

11. Panel system according to claim 9 or 10, characterized in that several spacer blocks (14) are connected with each other by means of cross webs in the grid of the spacers (10, 11, 13).

## Revendications

1. Système de plaques pour établir des sols à plaques, en vue du stockage de produits pouvant être déposés en vrac, en particulier pour le compostage, l'aération et/ou le séchage de substances organiques et/ou pour le traitement de gaz au moyen d'un lit de matériau filtrant se trouvant sur le sol à plaques, dans lequel
a) plusieurs plaques inférieures (17), à poser sur une base sous-jacente, plusieurs plaques-support supérieures (16) pourvues d'ouvertures de passage (6), et plusieurs éléments de maintien d'écartement (10, 11, 13), disposés selon un réseau régulier, entre les plaques inférieures (17) et les plaques-support (16) sont respectivement prévus pour créer un espace creux (18) entre celles-ci,
b) les plaques inférieures (17), les plaques-support (16) et les éléments d'espacement (10, 11, 13) sont des pièces moulées par injection réalisées en matière plastique.
c) les plaques inférieures (17) et/ou les plaques-support (16) sont réalisées sur au moins deux arêtes voisines, respectivement avec au moins une butée de joint de dilatation (19), susceptibles d'être déformées élastiquement du fait à sa flexibilité et de son élasticité et qui, à l'état non chargé, fait saillie hors de la ligne des arêtes,
d) les éléments d'espacement (10, 11, 13) sont susceptibles d'être reliés aux plaques inférieures (17) et/ou aux plaques-support (16) et/ou entre elles, au moyen de liaisons à enfichage ou emboîtement (1, 2, 3) s'engageant les unes dans les autres, et
e) les plaques inférieures (17) et les plaques-support (16) constituant le fond à plaques sont disposées en se chevauchant les unes les autres dans au moins une direction de la surface.

2. Système de plaques selon la revendication 1, caractérisé en ce que les éléments d'espacement (10, 11, 13) sont réalisés monobloc avec la plaque inférieure (17) et/ou la plaque-support (16).

3. Système de plaques selon la revendication 1 ou 2, caractérisé en ce que les éléments d'espacement (10, 11, 13) sont réalisés sous forme de colonnes creuses à section transversale ronde ou carrée, avec des nervures ou des ailettes de rigidification (12) disposées à l'intérieur.

4. Système de plaque selon l'une des revendications précédentes, caractérisé en ce que les plaques inférieures (17) et les plaques-support (16) sont carrées ou rectangulaires, et en ce que, sur la surface des plaques (17, 16) sont disposés des éléments d'espacement (10) ayant une section transversale pleine, sur les arêtes des plaques (17, 16) sont disposés des éléments d'espacement (11) ayant une demi-section transversale et sur les angles des plaques (17, 16) sont disposés des éléments d'espacement (13) faisant un quart de section transversale, chaque paire d'éléments d'espacement (11) ayant une demi-section transversale, venant de deux plaques (17, 16) limitrophes mutuellement, et chaque jeu de quatre éléments d'espacement (13), ayant un quart de section transversale et venant de quatre plaques (17, 16) limitrophes mutuellement, se complètent pour donner une section transversale d'éléments d'espacement pleine.

5. Système de plaque selon l'une des revendications précédentes, caractérisé en ce que les liaisons à emboîtement (1, 2, 3) sont réalisées du côté plaque sous forme de profilés à emboîtement, ayant chacun un bord de profilé d'emboîtement (8), entourant de façon annulaire l'extrémité libre de l'élément d'espacement (10, 11, 13) et ayant une pluralité de pinces de profilé d'emboîtement (9), disposées à l'intérieur du bord de profilé d'emboîtement (8) à distance de celui-ci et à distance les unes des autres, cette distance étant dimensionné de manière que le bord de profilé d'emboîtement (8) et les pinces de profilé d'emboîtement (9) maintiennent entre eux, en siège de serrage, l'extrémité libre d'un élément d'espacement (10, 11, 13) enfiché.

6. Système de plaques selon l'une des revendications précédentes, caractérisé en ce que les plaques-support (16) sont réalisées en face inférieure avec des nervurages (4, 5) qui sont disposés d'une part le long de lignes se croisant les unes les autres à angle droit et passant par les centres des supports d'espacement (10, 11, 13) ou des profilés d'emboîtement (1, 2. 3), et d'autre part entre ces centres.

7. Système de plaques selon la revendication 6, caractérisé en ce que des nervurages (4) s'étendant dans la surface de la plaque-support (16) sont réalisés sous forme de nervurages doubles de paroi et les nervurages (5) courant le long des bords de la plaque-support (16) sont réalisés sous forme de nervurage simple de paroi.

8. Système de plaques selon la revendication 7, caractérisé en ce que le nervurage double de paroi (4) est réalisé avec un espace intermédiaire (7) suffisamment large pour permettre le passage d'un outil à découper ou à séparer ou bien d'une lame de scie.

9. Système de plaque selon l'une des revendications précédentes, caractérisé en ce que sont prévues des pièces d'espacement supplémentaires (14) qui sont susceptibles d'être montées par enfichage ou emboîtement, respectivement entre deux supports d'espacement (10, 11, 13) ou entre un support d'espacement (10, 11, 13) et la plaque inférieure (17) et/ou la plaque-support (16).

10. Système de plaque selon la revendication 9, caractérisé en ce que les pièces d'espacement (14) sont également des pièces moulées en matière plastique par injection.

11. Système de plaque selon la revendication 9 ou 10, caractérisé en ce que plusieurs pièces d'espacement (14) sont reliées ensemble au moyen de barrettes transversales, dans le réseau des supports d'espacement (10, 11, 13).
